# EUROPÄISCHE PATENTSCHRIFT

(11) **EP 2 820 744 B1**
(45) Veröffentlichungstag und Bekanntmachung des Hinweises auf die Patenterteilung: **08.05.2019**
(21) Anmeldenummer: 13706022.4
(22) Anmeldetag: 26.02.2013
(51) Int. Cl.: H02K 3/51, H02K 15/16, H02K 7/04

(54) **ROTIERENDE ELEKTRISCHE MASCHINE**
ROTARY ELECTRIC MACHINE
MACHINE ÉLECTRIQUE TOURNANTE

(30) Priorität: 28.02.2012 DE 202012002024 U
(43) Veröffentlichungstag der Anmeldung: 07.01.2015
(73) Patentinhaber: Continental Automotive GmbH, 30165 Hannover (DE)
(72) Erfinder: BULATOW, Michael, 10553 Berlin (DE)
(86) Internationale Anmeldenummer: PCT/EP2013/053819
(87) Internationale Veröffentlichungsnummer: WO 2013/127793

(56) Entgegenhaltungen:
- EP-A1- 2 113 988
- DE-A1- 3 808 311
- JP-A- S59 103 551
- US-A- 3 311 511
- US-A- 3 558 950
- US-A- 5 122 696

## Beschreibung

Die vorliegende Erfindung betrifft eine rotierende elektrische Maschine, insbesondere einen Elektromotor oder einen Generator. Ferner wird ein Verfahren zur Herstellung einer rotierenden elektrischen Maschine offenbart.

In modernen Kraftfahrzeugen werden zunehmend Elektromotoren verbaut. Sie werden dabei insbesondere als im Antriebsstrang vollintegrierte Antriebsmotoren oder in Hybridanwendungen beispielsweise auch als Startergeneratoren eingesetzt. Dabei kommen zum Teil fremderregte Synchronmaschinen zum Einsatz, die einen Rotor aus einem mit einer Erregerwicklung versehenen Blechpaket aufweisen.

Bei Rotoren mit derartigen Blechpaketen erfolgt nach der Herstellung typischerweise ein Unwuchtausgleich entweder durch ein lokales Reduzieren von Masse oder durch ein Hinzufügen.

Aus der DE 10 2008 043 636 A1 ist ein Verfahren zum Unwuchtausgleich an Rotoren bekannt, bei dem mindestens ein Ausgleichsgewicht an einer Topfwand des Rotors befestigt wird
Oftmals ist jedoch das Hinzufügen von Gewichten mit mehr Aufwand verbunden als das Entfernen und häufig nicht mit der erforderlichen Genauigkeit möglich. Zudem ist für das Verfahren der DE 10 2008 043 636 A1 ein gut schweißbares Material erforderlich.

Aus der EP 2 113 988 A1, JP S59 103551 A, US 5 122 696 A oder DE 38 08 311 A1 ist ein Rotor mit einem Ausgleichs-, Zentrier- oder Wuchtring bekannt, wobei der Ausgleichs-, Zentrier- bzw. der Wuchtring in oder an einer Wickelkopfabdeckung des Rotors angeordnet ist.

Aus der US 3 311 511 A ist eine Eisenlegierung mit Chrom in einem Massenanteil von 18% bis 20% und Nickel in einem Massenanteil von 8% bis 12% bekannt.

Aufgabe der Erfindung ist es, eine möglichst einfach aufgebaute und gleichzeitig robuste rotierende elektrische Maschine anzugeben, bei der sich besonders einfach ein Unwuchtausgleich durchführen lässt.

Ferner soll ein ökonomisches Verfahren zur Herstellung einer solchen rotierenden elektrischen Maschine angegeben werden.

Die Erfindung ist eine rotierende elektrische Maschine wie im unabhängigen Anspruch 1 definiert. Weitere Ausgestaltungsformen der Erfindung sind in den abhängigen Ansprüchen 2 - 9 definiert.

Gemäß einem Aspekt der Erfindung wird eine rotierende elektrische Maschine angegeben, die folgendes aufweist:
- einen Rotor mit einem auf einer Rotorwelle angeordneten Rotorblechpaket;
- der Rotor weist zumindest eine das Rotorblechpaket in axialer Richtung der Rotorwelle abschließende Wickelkopfabdeckung auf, wobei die Wickelkopfabdeckung zumindest eine dem Rotorblechpaket zugewandte Innenseite aufweist;
- auf der Innenseite der Wickelkopfabdeckung ist ein Wuchtring konzentrisch um die Rotorwelle herum angeordnet.

Der Wuchtring ist an der Innenseite der Wickelkopfabdeckung mittels einer Rollierwelle befestigt, die in einer Seitenwand der Wickelkopfabdeckung eingebracht ist und die den Wuchtring festklemmt.

Bei dieser rotierenden elektrischen Maschine wird die ohnehin vorhandene Wickelkopfabdeckung zur Unterbringung eines Wuchtringes genutzt. Der die Rotorwelle konzentrisch umgebende Wuchtring hat den Vorteil, dass er einen Unwuchtausgleich in einfacher Weise sowohl in axialer als auch in radialer Richtung durch Entfernung und gegebenenfalls auch durch Hinzufügen von Material erlaubt. Der Wuchtring kann auf der Innenseite der Wickelkopfabdeckung befestigt werden.

Der Wuchtring, der mit der Wickelkopfabdeckung in einem Rollierprozess vereinigt wird, wird durch die Rollierwelle axial und radial fixiert. Die Rollierwelle drückt den Wuchtring insbesondere in axialer Richtung gegen die Innenseite der Wickelkopfabdeckung. Gleichzeitig bildet sie in axialer Richtung der Rotorwelle einen Hinterschnitt aus, der nach einem Vergussprozess mit Vergussmasse aufgefüllt wird und die Wickelkopfabdeckung so in axialer Richtung fixiert.

Gleichzeitig verleiht die Rollierwelle der Wickelkopfabdeckung eine größere Festigkeit. In einer Ausführungsform sind in der Seitenwand der Wickelkopfabdeckung mehrere Rollierwellen vorgesehen, um eine noch größere Festigkeit zu erreichen.

In einer Ausführungsform ist sowohl an einem ersten als auch an einem zweiten Ende des Rotors eine Wickelkopfabdeckung vorgesehen, auf deren Innenseite ein Wuchtring konzentrisch um die Rotorwelle herum angeordnet ist.

Bei dieser Ausführungsform werden unter den beiden Enden des Rotors die Stirnseiten verstanden, durch die die Rotorwelle hindurchtritt. Je nachdem, welches Lagerkonzept für den Rotor gewählt wird, kann im montierten Zustand im Bereich des eines Endes ein Festlager und im Bereich des anderen Endes ein Loslager für die Rotorwelle vorgesehen sein.

Bei dieser Ausführungsform sind an beiden Enden Wuchtringe vorgesehen, um einen besonders genauen Unwuchtausgleich zu ermöglichen.

In einer Ausführungsform weist der Wuchtring in axialer Richtung zumindest einen, gegebenenfalls auch mehrere Hinterschnitte auf. Derartige Hinterschnitte können insbesondere dadurch gebildet sein, dass der Wuchtring in axialler Richtung, d.h. parallel zur Richtung der Rotorwelle, bereichsweise schmaler ausgebildet ist. Derartige Hinterschnitte können während eines Vergussprozesses mit Vergussmasse gefüllt werden und die Wickelkopfabdeckung nach dem Aushärten axial fixieren.

In einer Ausführungsform weist der Wuchtring eine Legierung auf, wobei die Legierung Eisen, Chrom und Nickel enthält, wobei Chrom in der Legierung mit einem Gewichtsprozent zwischen 18 und 19 (nämlich 18% bis 19%) enthalten ist und Nickel in der Legierung mit einem Gewichtsprozent zwischen 12 und 13 (nämlich 12% bis 13%) enthalten ist.

Vorzugsweise weist der Wuchtring ein Material auf, das im Wesentlichen eine Legierungszusammensetzung Fe_{Rest}CrₐNi_{b}Mn_{c}C_{d}SiₑP_{f}S_{g}Nₕ, also eine Legierungszusammensetzung enthaltend:
- Chrom Cr mit einem Gewichtsprozent a zwischen 18 bis 19,
- Nickel Ni mit einem Gewichtsprozent b zwischen 12 bis 13,
- Mangan Mn mit einem Gewichtsprozent c zwischen 0 bis 1,4,
- Kohlenstoff C mit einem Gewichtsprozent d zwischen 0 bis 0,055,
- Silicium Si mit einem Gewichtsprozent e zwischen 0 bis 0,6,
- Phosphor P mit einem Gewichtsprozent f zwischen 0 bis 0,04,
- Schwefel S mit einem Gewichtsprozent g zwischen 0 bis 0,008,
- Stickstoff N mit einem Gewichtsprozent h zwischen 0 bis 0,1,
- Eisen Fe im restlichen Gewichtsprozent Rest,
aufweist, wobei vorzugsweise bzw. idealerweise gilt: Rest=100-a-b-c-d-e-f-g-h. Daneben kann das Material fertigungstypische Verunreinigungen mit anderen Stoffen aufweisen.

Gegenüber bekannten nicht rostenden Stählen, beispielsweise den Stählen 1.4301 oder 1.4303 nach Europäischer Norm EN 10020, weist dieses Material einen besonders hohen Anteil an Chrom und Nickel auf. Es hat sich gezeigt, dass Werkstücke aus diesem Stahl auch nach dem Umformen, Stanzen oder Schneiden unmagnetisierbar bleiben. Wirbelstromverluste werden somit reduziert. Dieser Stahl ist daher aufgrund seiner Festigkeit und seiner Unmagnetisierbarkeit besonders für die Wickelkopfabdeckung geeignet.

In einer Ausführungsform weist die Wickelkopfabdeckung eine Legierung auf, wobei die Legierung Eisen, Chrom und Nickel enthält, wobei Chrom in der Legierung mit einem Gewichtsprozent zwischen 18 und 19 (nämlich 18% bis 19%) enthalten ist und Nickel in der Legierung mit einem Gewichtsprozent zwischen 12 und 13 (nämlich 12% bis 13%) enthalten ist.

Vorzugsweise weist die Wickelkopfabdeckung ein Material auf, das im Wesentlichen die gleiche Legierungszusammensetzung Fe_{Rest}CrₐNi_{b}Mn_{c}C_{d}SiₑP_{f}S_{g}Nₕ wie beim Wuchtring aufweist, worin a, b, c, d, e, f, g und h ebenfalls in Gewichtsprozent angegeben sind und 18 ≤ a ≤ 19; 12 ≤ b ≤ 13; 0 ≤ c ≤ 1,4; 0 ≤ d ≤ 0,055; 0 ≤ e ≤ 0,6; 0 ≤ f ≤ 0,04; 0 ≤ g ≤ 0,008 und 0 ≤ h ≤ 0,1 gilt. Daneben kann das Material fertigungstypische Verunreinigungen mit anderen Stoffen aufweisen.

Dieser Stahl ist aufgrund seiner Festigkeit und seiner Unmagnetisierbarkeit besonders für die Wickelkopfabdeckung geeignet.

In einer Ausführungsform sind Hohlräume im Innenraum des Rotors mit einer Vergussmasse vergossen. Als Vergussmasse können bekannte elektrisch isolierende, aushärtbare Gießharze, beispielsweise Epoxidharze, eingesetzt werden. Das Vergießen des Innenraums hat den Vorteil, dass sämtliche Komponenten des Rotors zuverlässig fixiert werden. Dies ist insbesondere für hochdrehenden Rotoren von Vorteil, bei denen durch die im Betrieb entstehenden Fliehkräfte die Erregerwicklungen sonst aus den Nuten gezogen werden können.

Anstelle einer Vergussmasse kann auch eine Tränkmasse verwendet werden. Es ist auch denkbar, den Rotor mit einem Kunststoff, beispielsweise mit einem Polyamid, zu vergießen.

Bei einem vergossenen Rotor ist es vorteilhaft, die Passung zwischen der Wickelkopfabdeckung und dem Wuchtring derart zu wählen, dass keine Vergussmasse dazwischen eindringen kann. Dies hat den Vorteil, dass bei einem Anbohren der Wickelkopfabdeckung und des Wuchtrings zum Entfernen von Masse beim Unwuchtausgleich der Bohrer die Vergussmasse nicht durchdringen muss, die ihn stumpf werden lässt.

Der Wuchtring kann insbesondere durch Drehen hergestellt und anschließend abhängig vom verwendeten Material einsatzgeglüht werden. Er kann jedoch auch in einem Umformprozess beispielsweise durch Stanzen oder Tiefziehen hergestellt werden. Diese Verfahren sind besonders ökonomisch und zumindest bei verhältnismäßig dünnen Wuchtringen vorteilhaft.

Eine derartige rotierende elektrische Maschine ist auch für hohe Drehzahlen von 10 000 Umdrehungen pro Minute und mehr geeignet.

In einer Ausführungsform ist die Wickelkopfabdeckung in einem Tiefziehprozess hergestellt.

In einer Ausführungsform ist die rotierende elektrische Maschine als Elektromotor ausgebildet. Sie kann auch als Generator ausgebildet sein oder sowohl als Motor als auch als Generator betreibbar sein.

Derartige Elektromotoren eignen sich für die Verwendung in einem Kraftfahrzeug. Sie können sowohl als im Antriebsstrang vollintegrierte Antriebsmotoren, beispielsweise als Radnaben- oder Achsmotoren, als auch beispielsweise als Startergeneratoren eingesetzt werden. Gemäß einem Aspekt der Erfindung wird deshalb ein Kraftfahrzeug angegeben, das den beschriebenen Elektromotor aufweist. Das Kraftfahrzeug kann dabei als Elektro- oder Hybridfahrzeug ausgebildet sein.

Ferner wird ein Verfahren (nicht Teil der beanspruchten Erfindung) zur Herstellung einer rotierenden elektrischen Maschine angegeben, wobei das Verfahren folgendes aufweist:
- Bereitstellen eines Rotorblechpakets eines Rotors mit einer Erregerwicklung und zumindest einer Wickelkopfabdeckung, die den Rotor in axialer Richtung abschließt, wobei auf einer Innenseite der Wickelkopfabdeckung ein Wuchtring angeordnet ist;
- Auswuchten durch Entfernen von Material des Wuchtrings.

Dabei kann das Entfernen von Material beispielsweise durch Ausbohren oder Fräsen erfolgen. Es können auch andere Wuchtmethoden eingesetzt werden. Abhängig von dem gewählten Fertigungsprozess und der Geometrie der Wickelkopfabdeckungen kann der zusammengebaute Rotor sowohl radial als auch axial ausgewuchtet werden.

In einer Ausführungsform des Verfahrens ist es vorgesehen, dass ein Innenraum des Rotors mit einer Vergussmasse vergossen wird. Dabei wird der Rotor für den Vergussvorgang derart positioniert, dass sich in der Wickelkopfabdeckung vorgesehene Öffnungen, beispielsweise für einen Austritt von Vergussmasse, am höchsten Punkt befinden und sich in der Wickelkopfabdeckung vorgesehene weitere Öffnungen zum Einbringen der Vergussmasse an einem Punkt zwischen dem höchsten und dem tiefsten Punkt befinden. Bei dieser Ausführungsform können sich die einen Öffnungen insbesondere in einer am zweiten Ende des Rotors angeordneten Wickelkopfabdeckung befinden und zum Anlegen eines Unterdrucks genutzt werden, während sich die weiteren Öffnungen in einer am ersten Ende des Rotors angeordneten weiteren Wickelkopfabdeckung befinden und zum Einfüllen der Vergussmasse genutzt werden.

Bei dieser Ausführungsform füllt die Vergussmasse beim Vergießen sämtliche Hohlräume durch die eigene Schwerkraft auf. Während des Vergießens kann zusätzlich ein Unterdruck angelegt werden, um das Auffüllen auch schwer zugänglicher Hohlräume zu unterstützen und die Bildung Lufteinschlüssen zu verhindern.

Ausführungsbeispiele werden nun anhand der Zeichnungen näher erläutert.
- Figur 1: zeigt schematisch einen vereinfachten Längsschnitt durch einen ersten Bereich eines Rotors einer rotierenden elektrischen Maschine gemäß einer Ausführungsform der Erfindung;
- Figur 2: zeigt schematisch einen vereinfachten Längsschnitt durch einen zweiten Bereich des Rotors gemäß Figur 1 und
- Figur 3: zeigt schematisch einen vereinfachten Längsschnitt durch den Rotor gemäß einer Ausführungsform der Erfindung.

Gleiche Teile sind in allen Figuren mit denselben Bezugszeichen versehen.

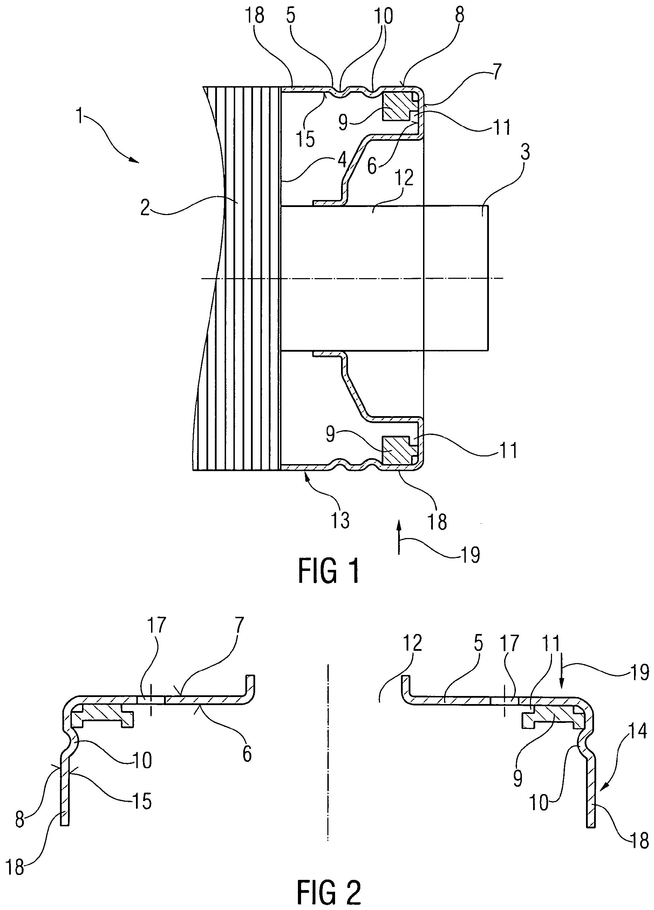

Figur 1 zeigt einen vereinfachten Längsschnitt durch einen Rotor 1 einer rotierenden elektrischen Maschine im Bereich seines ersten Endes 13. Der Stator ist nicht gezeigt.

Die rotierende elektrische Maschine ist in dieser Ausführungsform als fremderregte Synchronmaschine ausgebildet. Ihr Rotor 1 weist ein Rotorblechpaket 2 mit einer nicht gezeigten Erregerwicklung auf. Die Erregerwicklung ist in nicht gezeigten Nuten des Rotorblechpakets 2 untergebracht, der Nutinnenraum kann ansonsten mit einer Vergussmasse vergossen sein.

Im Bereich der Wickelköpfe 4 ist eine im Tiefziehverfahren hergestellte Wickelkopfabdeckung 5 vorgesehen. Diese umgibt das erste Ende des Rotorblechpakets 2 und die Erregerwicklung und weist eine zentrale Öffnung 12 zur Durchführung der Rotorwelle 3 auf. Die Rotorwelle 3 ist mit dem Rotorblechpaket 2 und der Wickelkopfabdeckung 5 drehfest verbunden und an nicht gezeigten Gehäuseteilen der elektrischen Maschine drehbar gelagert.

Die Wickelkopfabdeckung 5 schließt das Rotorblechpaket 2 in axialer Richtung ab. Sie weist eine dem Rotorblechpaket 2 zugewandte Innenseite mit einer inneren Stirnseite 6 und einer inneren Seitenfläche 15 sowie eine vom Rotorblechpaket 2 abgewandte Außenseite mit einer äußeren Stirnseite 7 und einer äußeren Seitenfläche 8 auf.

An der Innenseite der Wickelkopfabdeckung 5 ist ein Wuchtring 9 angeordnet. Der Wuchtring 9 umgibt die Rotorwelle 3 konzentrisch und liegt in der gezeigten Ausführungsform an der inneren Stirnseite 6 und an der inneren Seitenfläche 15 an. Der Wuchtring 9 ist derart geformt, dass in einem Bereich an der inneren Stirnseite 6 ein Hinterschnitt 11 gebildet ist. In den Bereich des Hinterschnitts 11 dringt während eines Vergussprozesses Vergussmasse ein, die die Wickelkopfabdeckung 5 in axialer Richtung fixiert.

Der Wuchtring 9 ist in axialer und radialer Richtung mittels einer Rollierwelle 10 fixiert, die in die Seitenwand 18 derart eingebracht ist, dass sie den Wuchtring 9 festklemmt. Dahinter ist noch eine weitere Rollierwelle 10 vorgesehen, die der Seitenwand 18 zusätzlich Festigkeit gibt.

Bei dieser Ausführungsform wird beim Unwuchtausgleich in radialer Richtung, d.h. in der Richtung senkrecht zur Längsachse der Rotorwelle 3, Material des Wuchtrings 9 entfernt. Diese Auswuchtrichtung ist durch den Pfeil 19 gekennzeichnet.

Die Wickelkopfabdeckung 5 und der Wuchtring 9 bestehen aus einem unmagnetisierbaren Stahl mit der Legierungszusammensetzung Fe_{Rest}CrₐNi_{b}Mn_{c}C_{d}SiₑP_{f}S_{g}Nₕ, worin a, b, c, d, e, f, g und h in Gewichtsprozent angegeben sind und 18 ≤ a ≤ 19; 12 ≤ b ≤ 13; 0 ≤ c ≤ 1,4; 0 ≤ d ≤ 0,055; 0 ≤ e ≤ 0,6; 0 ≤ f ≤ 0,04; 0 ≤ g ≤ 0,008 und 0 ≤ h ≤ 0,1 gilt.

Es ist jedoch auch denkbar, für die Wickelkopfabdeckung andere austenitische Stähle zu verwenden, beispielsweise den Stahl 1.4301.

Figur 2 zeigt schematisch einen vereinfachten Längsschnitt durch den Rotor 1 gemäß Figur 1 im Bereich seines zweiten Endes 14. Auch an dieser Wickelkopfabdeckung 5 ist ein Wuchtring 9 vorgesehen, der mittels einer Rollierwelle 10 gegen die innere Stirnseite 6 geklemmt ist. Der Wuchtring 9 ist derart geformt, dass er zur Fixierung der Wickelkopfabdeckung 5 einen Hinterschnitt 11 bildet, der mit Vergussmasse aufgefüllt wird.

Hier wird beim Unwuchtausgleich in axialer Richtung, d.h. in der Richtung parallel zur Längsachse der Rotorwelle 3, Material des Wuchtrings 9 entfernt. Diese Auswuchtrichtung ist durch den Pfeil 19 gekennzeichnet.

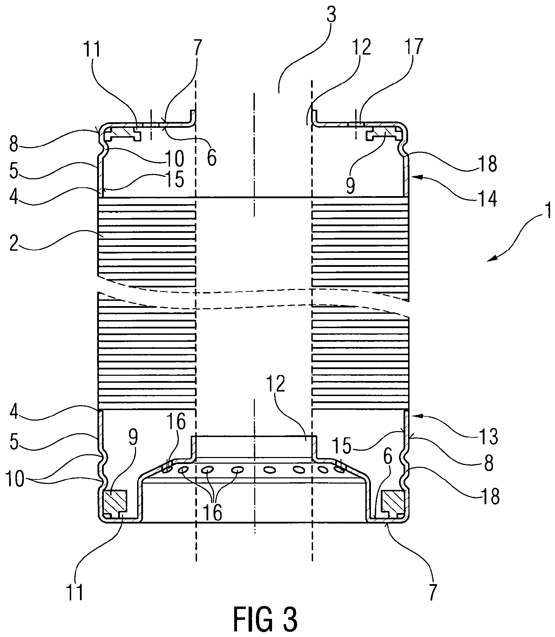

Figur 3 zeigt schematisch einen vereinfachten Längsschnitt durch einen Rotor 1, bei dem sowohl das erste Ende 13 als auch das zweite Ende 14 dargestellt sind.

In dieser Darstellung sind erste Öffnungen 16 für Vergussmasse im Bereich des ersten Endes 13 und zweite Öffnungen 17 für Vergussmasse im Bereich des zweiten Endes 14 gezeigt. Beim Vergießen dringt durch die ersten Öffnungen 16 Vergussmasse unter Druck ins Innere des Rotors 1 ein und füllt die vorhandenen Hohlräume auf.

Da sich die Öffnungen 16, 17 auf einem anderen Niveau befinden als die Wuchtringe 9, hat es sich als vorteilhaft erwiesen, den Rotor 1 während des Vergussprozesses so zu positionieren, dass sich die zweiten Öffnungen 17 am höchsten Punkt befinden. Die Vergussmasse wird dann durch die ersten Öffnungen 16 eingebracht, während an die zweiten Öffnungen 17 ein Unterdruck angelegt wird. Bei diesem Vorgehen füllt die Vergussmasse die Hohlräume unterhalb der ersten Öffnungen 16 durch ihre eigene Schwerkraft auf und wird zusätzlich durch den Unterdruck nach oben gezogen, um die dort vorhandenen Hohlräume zu füllen.

Obwohl zumindest eine beispielhafte Ausführungsform in der vorhergehenden Beschreibung gezeigt wurde, können verschiedene Änderungen und Modifikationen vorgenommen werden. Die genannten Ausführungsformen sind lediglich Beispiele.

Offenbart wird zudem ein Verfahren (nicht Teil der beanspruchten Erfindung) zur Herstellung einer rotierenden elektrischen Maschine, wobei das Verfahren folgendes aufweist:
- Bereitstellen eines Rotorblechpakets 2 eines Rotors 1 mit einer Erregerwicklung und zumindest einer Wickelkopfabdeckung 5, die den Rotor 1 in axialer Richtung abschließt, wobei auf einer Innenseite 6, 15 der Wickelkopfabdeckung 5 ein Wuchtring 9 angeordnet ist;
- Auswuchten durch Entfernen von Material des Wuchtrings 9.

Vorzugsweise wird dabei ein Innenraum des Rotors 1 mit einer Vergussmasse vergossen, wobei der Rotor 1 für den Vergussvorgang derart positioniert wird, dass sich in der Wickelkopfabdeckung 5 vorgesehene Öffnungen 17 am höchsten Punkt befinden und sich in der Wickelkopfabdeckung 5 vorgesehene weitere Öffnungen 16 zum Einbringen der Vergussmasse an einem Punkt zwischen dem höchsten und dem tiefsten Punkt befinden.

### Bezugszeichenliste

- 1: Rotor
- 2: Rotorblechpaket
- 3: Rotorwelle
- 4: Wickelkopf
- 5: Wickelkopfabdeckung
- 6: innere Stirnseite
- 7: äußere Stirnseite
- 8: äußere Seitenfläche
- 9: Wuchtring
- 10: Rollierwelle
- 11: Hinterschnitt
- 12: zentrale Öffnung
- 13: erstes Ende
- 14: zweites Ende
- 15: innere Seitenfläche
- 16: erste Öffnungen
- 17: zweite Öffnungen
- 18: Seitenwand
- 19: Pfeil

## Patentansprüche

1. Rotierende elektrische Maschine, die folgendes aufweist:
- einen Rotor (1) mit einem auf einer Rotorwelle (3) angeordneten Rotorblechpaket (2);
- wobei der Rotor (1) zumindest eine das Rotorblechpaket (2) in axialer Richtung der Rotorwelle (3) abschließende Wickelkopfabdeckung (5) aufweist;
- die Wickelkopfabdeckung (5) zumindest eine dem Rotorblechpaket (2) zugewandte Innenseite (6, 15) aufweist;
- auf der Innenseite (6, 15) der Wickelkopfabdeckung (5) ein Wuchtring (9) konzentrisch um die Rotorwelle (3) herum angeordnet ist,
**dadurch gekennzeichnet, dass**
- der Wuchtring (9) an der Innenseite (6, 15) der Wickelkopfabdeckung (5) mittels einer durch Rollierprozess erzeugten Rollierwelle (10) befestigt ist, die in einer Seitenwand (18) der Wickelkopfabdeckung (5) eingebracht ist und die den Wuchtring (9) gegen die Innenseite (6, 15) festklemmt.

2. Rotierende elektrische Maschine nach Anspruch 1,
wobei sowohl an einem ersten als auch an einem zweiten Ende des Rotors (1) eine Wickelkopfabdeckung (5) vorgesehen ist, auf deren Innenseite (6, 15) ein Wuchtring (9) konzentrisch um die Rotorwelle (3) herum angeordnet ist.

3. Rotierende elektrische Maschine nach Anspruch 1 oder 2,
wobei in der Seitenwand (18) der Wickelkopfabdeckung (5) mehrere Rollierwellen (10) vorgesehen sind.

4. Rotierende elektrische Maschine nach einem der Ansprüche 1 bis 3,
wobei der Wuchtring (9) in axialer Richtung der Rotorwelle (3) einen Hinterschnitt (11) zur Fixierung der Wickelkopfabdeckung (5) aufweist.

5. Rotierende elektrische Maschine nach einem der Ansprüche 1 bis 4,
wobei der Wuchtring (9) eine Legierung aufweist, wobei die Legierung Eisen, Chrom und Nickel enthält, wobei Chrom mit einem Gewichtsprozent zwischen 18 und 19 in der Legierung enthalten ist und Nickel mit einem Gewichtsprozent zwischen 12 und 13 in der Legierung enthalten ist.

6. Rotierende elektrische Maschine nach Anspruch 5,
wobei der Wuchtring (9) eine Legierungszusammensetzung Fe_{Rest}CrₐNi_{b}Mn_{c}C_{d}SiₑP_{f}S_{g}Nₕ aufweist, worin a, b, c, d, e, f, g und h in Gewichtsprozent angegeben sind und 18 ≤ a ≤ 19; 12 ≤ b ≤ 13; 0 ≤ c ≤ 1,4; 0 ≤ d ≤ 0,055; 0 ≤ e ≤ 0,6; 0 ≤ f ≤ 0,04; 0 ≤ g ≤ 0,008 und 0 ≤ h ≤ 0,1 gilt.

7. Rotierende elektrische Maschine nach einem der Ansprüche 1 bis 6,
wobei die Wickelkopfabdeckung (5) eine Legierung aufweist, wobei die Legierung Eisen, Chrom und Nickel enthält, wobei Chrom mit einem Gewichtsprozent zwischen 18 und 19 in der Legierung enthalten ist und Nickel mit einem Gewichtsprozent zwischen 12 und 13 in der Legierung enthalten ist.

8. Rotierende elektrische Maschine nach Anspruch 7,
wobei die Wickelkopfabdeckung (5) eine Legierungszusammensetzung Fe_{Rest}CrₐNi_{b}Mn_{c}C_{d}SiₑP_{f}S_{g}Nₕ aufweist, worin a, b, c, d, e, f, g und h in Gewichtsprozent angegeben sind und 18 ≤ a ≤ 19; 12 ≤ b ≤ 13; 0 ≤ c ≤ 1,4; 0 ≤ d ≤ 0,055; 0 ≤ e ≤ 0,6; 0 ≤ f ≤ 0,04; 0 ≤ g ≤ 0,008 und 0 ≤ h ≤ 0,1 gilt.

9. Rotierende elektrische Maschine nach einem der vorangehenden Ansprüche,
wobei die Wickelkopfabdeckung (5) in einem Tiefziehprozess hergestellt ist.

## Claims

1. Rotating electrical machine which comprises the following:
- a rotor (1) having a laminated rotor core (2) which is arranged on a rotor shaft (3);
- wherein the rotor (1) has at least one end winding cover (5) which terminates the laminated rotor core (2) in the axial direction of the rotor shaft (3);
- the end winding cover (5) has at least one inner face (6, 15) which faces the laminated rotor core (2);
- a balancing ring (9) is arranged concentrically around the rotor shaft (3) on the inner face (6, 15) of the end winding cover (5),
**characterized in that**
the balancing ring (9) is attached to the inner face (6, 15) of the end winding cover (5) by means of a rolling undulation (10) produced by a rolling process which is made in a side wall (18) of the end winding cover (5) and which firmly clamps the balancing ring (9) against the inner face (6, 15).

2. Rotating electrical machine according to claim 1, wherein an end winding cover (5) is provided at a first and at a second end of the rotor (1), a balancing ring (9) being arranged concentrically around the rotor shaft (3) on the inner face (6, 15) of said end winding covers.

3. Rotating electrical machine according to Claim 1 or 2, wherein a plurality of rolling undulations (10) are provided in the side wall (18) of the end winding cover (5).

4. Rotating electrical machine according to one of Claims 1 to 3, wherein the balancing ring (9) has an undercut (11) in the axial direction of the rotor shaft (3) for the purpose of fixing the end winding cover (5).

5. Rotating electrical machine according to one of Claims 1 to 4, wherein the balancing ring (9) comprises an alloy, wherein the alloy contains iron, chromium and nickel, wherein chromium is contained in the alloy in a percentage by weight of between 18 and 19, and nickel is contained in the alloy in a percentage by weight of between 12 and 13.

6. Rotating electrical machine according to Claim 5, wherein the balancing ring (9) comprises an alloy composition Fe_{remainder}CrₐNi_{b}Mn_{c}C_{d}SiₑP_{f}S_{g}Nₕ, where a, b, c, d, e, f, g and h are indicated in a percentage by weight and 18 ≤ a ≤ 19; 12 ≤ b ≤ 13; 0 ≤ c ≤ 1.4; 0 ≤ d ≤ 0.055; 0 ≤ e ≤ 0.6; 0 ≤ f ≤ 0.04; 0 ≤ g ≤ 0.008 and 0 ≤ h ≤ 0.1.

7. Rotating electrical machine according to one of Claims 1 to 6, wherein the end winding cover (5) comprises an alloy, wherein the alloy contains iron, chromium and nickel, wherein chromium is contained in the alloy in a percentage by weight of between 18 and 19, and nickel is contained in the alloy in a percentage by weight of between 12 and 13.

8. Rotating electrical machine according to Claim 7, wherein the end winding cover (5) comprises an alloy composition Fe_{remainder}CrₐNi_{b}Mn_{c}C_{d}SiₑP_{f}S_{g}Nₕ, where a, b, c, d, e, f, g and h are indicated in a percentage by weight and 18 ≤ a ≤ 19; 12 ≤ b ≤ 13; 0 ≤ c ≤ 1.4; 0 ≤ d ≤ 0.055; 0 ≤ e ≤ 0.6; 0 ≤ f ≤ 0.04; 0 ≤ g ≤ 0.008 and 0 ≤ h ≤ 0.1.

9. Rotating electrical machine according to one of the preceding claims, wherein the end winding cover (5) is produced in a deep-drawing process.

## Revendications

1. Machine électrique tournante présentant les caractéristiques suivantes :
- un rotor (1) doté d'un paquet de tôles de rotor (2) disposé sur un arbre de rotor (3) ;
- dans laquelle le rotor (1) présente au moins un capot de tête d'enroulement (5) terminant le paquet de tôles de rotor (2) dans la direction axiale de l'arbre de rotor (3) ;
- le capot de tête d'enroulement (5) comporte au moins une face interne (6, 15) faisant face au paquet de tôles de rotor (2) ;
- une bague d'équilibrage (9) est disposée de manière concentrique autour de l'arbre de rotor (3) sur la face interne (6, 15) du capot de tête d'enroulement (5),
**caractérisée en ce que**
- la bague d'équilibrage (9) est fixée sur la face interne (6, 15) du capot de tête d'enroulement (5) au moyen d'un arbre de galetage (10) produit par un procédé de galetage, qui est inséré dans une paroi latérale (18) du capot de tête d'enroulement (5) et qui serre la bague d'équilibrage (9) contre la face interne (6, 15).

2. Machine électrique tournante selon la revendication 1, dans laquelle il est prévu à la fois à une première et à une deuxième extrémité du rotor (1) un capot de tête d'enroulement (5) sur la face interne (6, 15) duquel une bague d'équilibrage (9) est disposée de manière concentrique autour de l'arbre de rotor (3).

3. Machine électrique tournante selon la revendication 1 ou 2, dans laquelle il est prévu plusieurs arbres de galetage (10) dans la paroi latérale (18) du capot de tête d'enroulement (5).

4. Machine électrique tournante selon l'une des revendications 1 à 3,
dans laquelle la bague d'équilibrage (9) présente une contre-dépouille (11) dans la direction axiale de l'arbre de rotor (3) pour la fixation du capot de tête d'enroulement (5).

5. Machine électrique tournante selon l'une des revendications 1 à 4,
dans laquelle la bague d'équilibrage (9) comprend un alliage, dans laquelle l'alliage contient du fer, du chrome et du nickel, dans laquelle le pourcentage en poids du chrome dans l'alliage est compris entre 18 et 19 et le pourcentage en poids du nickel dans l'alliage est compris entre 12 et 13.

6. Machine électrique tournante selon la revendication 5, dans laquelle la bague d'équilibrage (9) présente une composition d'alliage de Fe_{Rest}CrₐNi_{b}Mn_{c}C_{d}SiₑP_{f}S_{g}Nₕ, où a, b, c, d, e, f, g et h sont exprimés en pourcentage en poids et avec 18 ≤ a ≤ 19 ; 12 ≤ b ≤ 13 ; 0 ≤ c ≤ 1,4 ; 0 ≤ d ≤ 0,055 ; 0 ≤ e ≤ 0,6 ; 0 ≤ f ≤ 0,04 ; 0 ≤ g ≤ 0,008 et 0 ≤ h ≤ 0,1.

7. Machine électrique tournante selon l'une des revendications 1 à 6,
dans laquelle le capot de tête d'enroulement (5) comprend un alliage, dans laquelle l'alliage contient du fer, du chrome et du nickel, dans laquelle le pourcentage en poids du chrome dans l'alliage est compris entre 18 et 19 et le pourcentage en poids du nickel dans l'alliage est compris entre 12 et 13.

8. Machine électrique rotative selon la revendication 7, dans laquelle le capot de tête d'enroulement (5) comprend une composition d'alliage de Fe_{Rest}CrₐNi_{b}Mn_{c}C_{d}SiₑP_{f}S_{g}Nₕ, où a, b, c, d, e, f, g et h sont exprimés en pourcentage en poids et avec 18 ≤ a ≤ 19 ; 12 ≤ b ≤ 13 ; 0 ≤ c ≤ 1,4 ; 0 ≤ d ≤ 0,055 ; 0 ≤ e ≤ 0,6 ; 0 ≤ f ≤ 0,04 ; 0 ≤ g ≤ 0,008 et 0 ≤ h ≤ 0,1.

9. Machine électrique tournante selon l'une des revendications précédentes, dans laquelle le capot de tête d'enroulement (5) est réalisé par un processus d'emboutissage profond.
